# FASCICULE DE BREVET EUROPEEN

(11) **EP 2 639 486 B1**
(45) Date de publication et mention de la délivrance du brevet: **27.07.2016**
(21) Numéro de dépôt: 13158786.7
(22) Date de dépôt: 12.03.2013
(51) Int. Cl.: F16J 15/02, F16L 55/11, F16L 55/16

(54) **Dispositif et procédé d'obturation**
Verschlussvorrichtung und -Verfahren
Sealing device and method

(30) Priorité: 15.03.2012 FR 1252364
(43) Date de publication de la demande: 18.09.2013
(73) Titulaire: Airbus Opérations SAS, 31060 Toulouse (FR)
(72) Inventeur: Mateo, Stéphane, 82170 Dieupentale (FR)
(74) Mandataire: Gicquel, Olivier Yves Gérard

(56) Documents cités:
- DE-U1- 20 010 329
- GB-A- 518 070
- GB-A- 771 261
- US-A- 5 195 588
- US-A- 5 469 890
- US-A- 5 779 085
- US-A- 5 806 566

## Description

La présente invention concerne un dispositif et un procédé d'obturation, concernant notamment l'obturation d'une tuyauterie d'aéronef pour la réalisation par exemple d'un contrôle d'étanchéité.

Le domaine de la présente invention est le domaine aéronautique et plus particulièrement celui des outils mis en oeuvre pour réaliser des contrôles sur un aéronef.

Un outil spécifique, appelé obturateur, est utilisé sur les chaines d'assemblage d'aéronefs pour obturer un circuit de drainage d'un mât réacteur de façon simple et rapide. L'obturation réalisée à l'aide d'un tel outil permet d'effectuer un essai de contrôle d'étanchéité du circuit de carburant de l'aéronef en cours d'assemblage. L'obturateur comporte généralement un corps présentant une première extrémité avec un embout muni d'un joint. Durant l'essai, l'embout vient obturer une tuyauterie et l'obturateur est maintenu en place grâce à une équerre agissant sur le corps de l'obturateur en étant fixée sur un support de protection de l'aéronef.

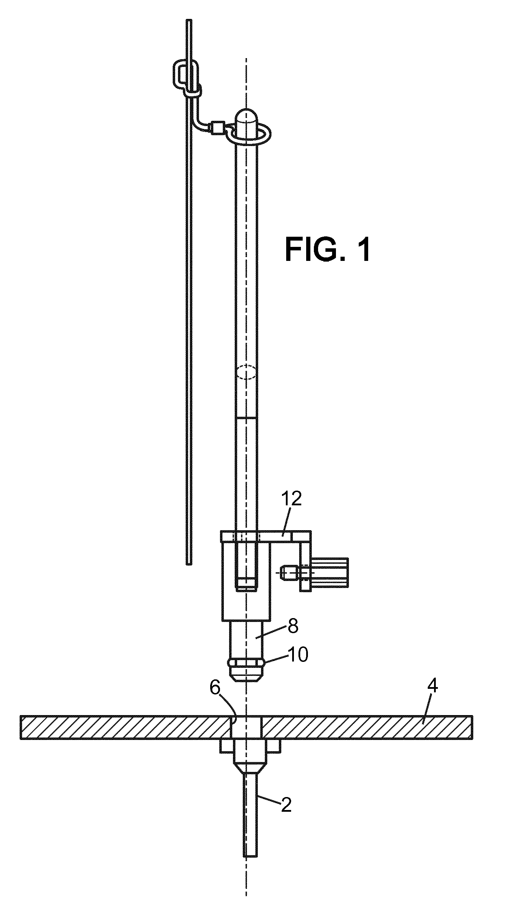

La figure 1 ci-jointe illustre un obturateur de l'art antérieur. Sur cette figure, on reconnaît une tuyauterie 2 qui constitue une partie d'un circuit de carburant au niveau d'un mât réacteur d'un aéronef, ainsi qu'une plaque 4 formant une paroi. Cette plaque 4 présente un alésage 6 qui permet d'accéder à la tuyauterie 2, cette dernière s'étendant perpendiculairement à la plaque 4 d'un côté de celle-ci.

Du côté de la plaque 4 opposé à la tuyauterie 2, on remarque la présence d'un embout 8 qui porte un joint d'étanchéité 10. Cet embout 8 est muni d'une équerre 12 permettant de réaliser une fixation sur un support (non représenté) de l'aéronef correspondant.

Un problème qui se pose avec la mise en oeuvre d'un tel obturateur de l'art antérieur concerne la fixation de l'équerre. En effet, la zone dans laquelle doivent être positionnés l'embout et son équerre est d'accès difficile. La mise en place de l'obturateur peut donc prendre du temps.

Lorsque dans certains cas, comme illustré sur la figure 1, l'accès à la tuyauterie à obturer se fait à travers un alésage d'une paroi de l'aéronef, il arrive que la tuyauterie à obturer ne soit pas parfaitement centrée par rapport audit alésage. Un décalage (illustré sur la figure 1) entre le centre (ou l'axe) de cet alésage et le centre (ou l'axe) de la tuyauterie apparaît donc et rend difficile l'obturation par l'embout et son joint d'étanchéité. Une solution pourrait alors consister à venir obturer uniquement l'alésage réalisé dans la paroi de l'aéronef. Toutefois, du fait de l'état de surface de cet alésage, il n'est pas possible de garantir une bonne étanchéité au niveau de celui-ci. Il convient donc de réaliser une obturation au niveau de la tuyauterie.

Le problème qui se pose alors avec un obturateur de l'art antérieur tel que décrit plus haut est qu'il convient de s'adapter au décalage entre l'axe de l'alésage et celui de la tuyauterie. Cette opération est délicate et peut nécessiter, en plus de l'obturateur, l'utilisation par exemple de silicone industriel pour parfaire l'étanchéité. En outre, comme pour la mise en place de l'équerre, les conditions d'accès sont difficiles et compliquent l'opération.

Enfin, sur un même type d'aéronef, il est proposé fréquemment d'avoir des réacteurs différents, provenant de motoristes différents. Les diamètres des orifices à obturer peuvent varier et il est alors nécessaire de prévoir un outil d'obturation pour chacune des motorisations proposées.

La présente invention a pour but de proposer un dispositif d'obturation et un procédé d'obturation qui permettent de réaliser l'obturation d'une tuyauterie d'aéronef, notamment au niveau d'un mât réacteur d'un aéronef, sans avoir à employer dans certains cas des moyens d'étanchéité additionnels, tels par exemple du silicone industriel.

Un autre but de la présente invention est que la mise en place du dispositif d'obturation soit rapide et ergonomique. Avantageusement, la présente invention permettra qu'un même dispositif d'obturation, dans une certaine mesure, puisse être utilisé pour différentes motorisations d'un même aéronef, ou bien même pour différents types d'aéronefs.

Un moyen d'obturation d'un embout cylindrique comportant des moyens élastiques exerçant une pression sur l'obturateur est connu du document GB 771261 A, dans ce document l'embout est inséré dans le dispositif.

À cet effet, la présente invention propose un dispositif d'obturation d'une ouverture d'une tuyauterie d'aéronef, l'ouverture étant disposée contre une paroi, comportant un corps portant un embout muni d'un joint d'étanchéité.

Selon la présente invention le joint d'étanchéité présente une surface extérieure dont une zone au moins présente une forme tronconique.

La forme tronconique d'au moins une partie de la surface du joint permet de s'adapter à un décalage d'alignement entre une tuyauterie et un alésage correspondant tout en permettant d'assurer une bonne étanchéité par exemple lors d'un contrôle d'étanchéité, notamment un contrôle d'étanchéité d'un réservoir d'aéronef. En outre, selon les diamètres choisis pour le tronc de cône, il est également possible d'avoir un même dispositif d'obturation pour des tuyauteries de diamètres différents (dans une plage de diamètres prédéterminée bien entendu).

Dans une forme de réalisation préférée d'un dispositif d'obturation selon l'invention, l'embout est avantageusement mobile par rapport au corps de manière à pouvoir s'adapter à l'environnement. Dans cette forme de réalisation, il est avantageusement prévu que le dispositif comprenne en outre des moyens élastiques agissant sur l'embout dans une direction tendant à éloigner l'embout du corps. De cette manière, il est possible notamment d'exercer une pression sur l'embout et de parfaire de la sorte l'étanchéité réalisée par le joint. En outre, le dispositif d'obturation comporte ainsi des moyens lui permettant; lors de l'insertion de l'embout, d'être contraints afin d'exercer une force dans le sens inverse d'insertion. De la sorte, une surface prévue sur le corps, par exemple une surface externe, peut venir appliquer cette force contre une butée extérieure et ainsi bloquer le dispositif en position d'obturation et en maintenant sur l'embout une pression de contact.

Selon une variante de réalisation d'un dispositif d'obturation selon l'invention dans lequel l'embout est mobile par rapport au corps, l'embout forme par exemple une extrémité distale d'une tige, ladite tige présente à son extrémité proximale, opposée à son extrémité distale, une tête cylindrique, et le corps peut présenter au moins une zone tubulaire et un épaulement ménagé à l'une de ses extrémités agencés de telle sorte que ladite tête cylindrique puisse coulisser à l'intérieur de cette zone tubulaire jusqu'à l'épaulement. On réalise ici un système piston/cylindre dans lequel le piston est associé à l'embout destiné à réaliser l'étanchéité et où le corps du dispositif intègre le cylindre dans lequel coulisse le piston. La course du piston est limitée par l'épaulement. Dans cette variante d'un dispositif d'obturation selon l'invention, on prévoit avantageusement que les moyens élastiques comprennent un ressort logé à l'intérieur de la zone tubulaire et qui précontraint la tête cylindrique en direction de l'épaulement, pour permettre de garantir d'exercer une pression sur le joint. L'extrémité du corps tubulaire opposée à l'épaulement peut être par exemple fermée par un bouchon.

Pour faciliter le maintien d'un dispositif d'obturation selon la présente invention dans une position dans laquelle il réalise une obturation, on peut prévoir que le corps présente une surface extérieure sur laquelle au moins un cran est réalisé, chaque cran pouvant alors être utilisé pour le maintien du dispositif. La surface extérieure du corps peut également avantageusement présenter une zone de préhension.

Pour permettre d'avoir une bonne étanchéité, le joint d'étanchéité est par exemple réalisé en caoutchouc.

Dans un dispositif d'obturation selon l'invention, la forme tronconique est par exemple telle que son plus petit diamètre est inférieur à 9 mm et que son plus grand diamètre est supérieur à 13 mm.

La présente invention propose également un procédé d'obturation d'une tuyauterie d'aéronef présentant une ouverture disposée contre une paroi, un alésage dans ladite paroi permettant un accès à l'ouverture de la tuyauterie.

Selon la présente invention, ce procédé comporte les étapes suivantes :
- mise en place d'une partie au moins d'un joint d'étanchéité présentant une zone de forme tronconique dans l'ouverture de la tuyauterie à travers l'alésage de la paroi, ledit joint se trouvant à une extrémité d'un dispositif d'obturation,
- maintien en place du joint d'étanchéité dans l'ouverture par blocage du dispositif d'obturation contre un support fixe par rapport à la tuyauterie.

Il s'agit ici d'un procédé de mise en oeuvre d'un dispositif d'obturation tel que décrit plus haut. Il peut être utilisé notamment en vue de la réalisation d'un contrôle d'étanchéité.

Pour ce procédé d'obturation, on peut prévoir par exemple d'utiliser l'une des variantes du dispositif d'obturation décrit plus haut. Ainsi, selon une forme de réalisation préférée, le procédé selon l'invention prévoit que le dispositif d'obturation comporte un corps tubulaire, que le joint d'étanchéité est monté sur un embout mobile par rapport au corps tubulaire, que le corps tubulaire contient des moyens élastiques agissant sur l'embout dans une direction tendant à éloigner le joint d'étanchéité du corps tubulaire, que les moyens élastiques sont contraints après mise en place du joint d'étanchéité dans l'ouverture, et que le corps tubulaire présente une face extérieure avec au moins une butée pouvant coopérer avec le support fixe de telle sorte que la contrainte exercée sur les moyens élastiques soit maintenue et contribue au blocage du corps tubulaire contre le support fixe.

Des détails et avantages de la présente invention apparaitront mieux de la description qui suit, faite en référence au dessin schématique annexé sur lequel :
La figure 1 est une vue schématique d'un dispositif d'obturation de l'art antérieur dans son environnement,
La figure 2 montre en perspective un dispositif d'obturation selon la présente invention,
La figure 3 est une vue schématique en coupe, à échelle agrandie par rapport à la figure 2, montrant une variante d'un dispositif d'obturation selon l'invention en service, et
La figure 4 est une vue en perspective éclatée, à échelle encore agrandie par rapport à la figure 3, du dispositif d'obturation de la figure précédente.

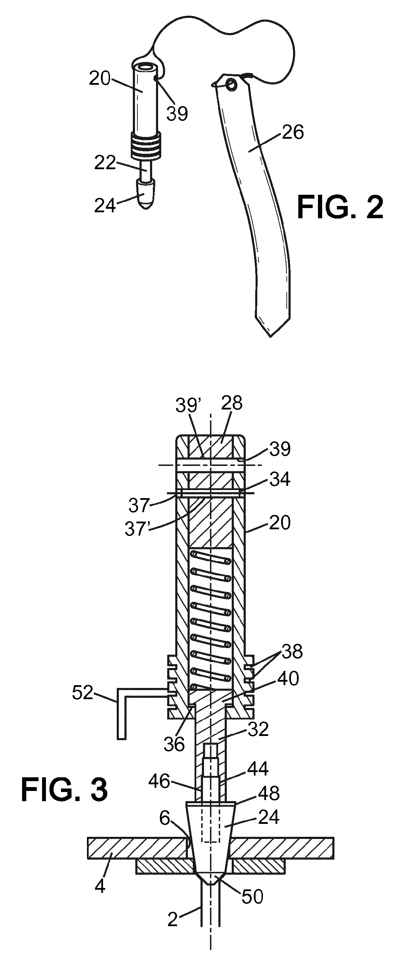

La figure 1 représente un dispositif d'obturation de l'art antérieur. Ce dernier, ainsi que son environnement, ont déjà été décrits au préambule. La figure 3 montre quant à elle un obturateur selon la présente invention dans un environnement similaire à celui décrit en référence à la figure 1. Les références utilisées dans cette figure 1 sont donc reprises pour désigner des éléments similaires de l'environnement sur la figure 3. On retrouve ainsi sur cette figure 3 une plaque 4 comportant un alésage 6. D'un côté de la plaque 4, perpendiculairement à celle-ci, s'étend une tuyauterie 2 d'un circuit d'alimentation en carburant d'un aéronef. Cette tuyauterie 2 est normalement située face à l'alésage 6 et centrée par rapport à celui-ci. Toutefois, compte tenu de tolérances de fabrication, il arrive qu'un décalage apparaisse dans le positionnement de la tuyauterie 2 par rapport à l'alésage 6.

La figure 2 montre, à échelle réduite par rapport à la figure 3, un obturateur selon la présente invention. Les structures des obturateurs des figures 2 et 3 sont très proches et les différences entre ces structures seront évoquées plus loin. Chacun de ces obturateurs comporte un corps 20 ainsi qu'un embout 22 muni d'un joint 24 d'étanchéité. Sur la figure 2, on remarque en outre que le dispositif d'obturation est équipé d'une étiquette d'identification 26 qui n'intervient pas pour la réalisation de l'obturation de la tuyauterie 2.

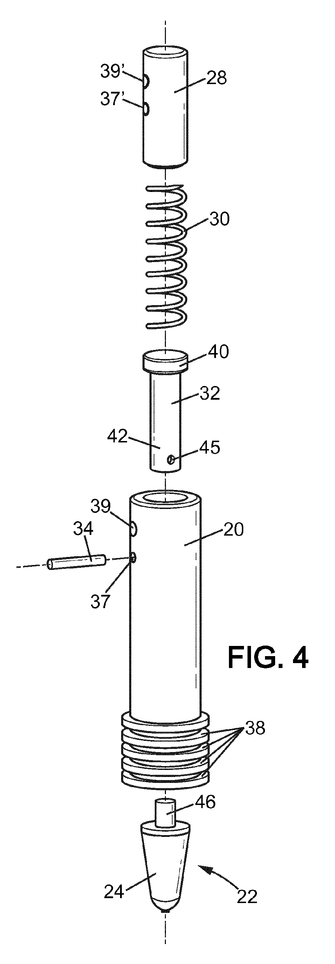

La figure 4 montre différentes pièces permettant de réaliser l'obturateur illustré sur la figure 3.

On reconnait sur la figure 4 le corps 20, l'embout 22 et son joint 24 d'étanchéité. On a également représenté sur cette figure 4 un bouchon 28, un ressort 30, un piston 32 et une goupille d'arrêt 34.

Bien qu'habituellement un obturateur soit orienté obliquement lorsqu'il est utilisé pour obturer une tuyauterie, on supposera dans la suite de la description que, comme représenté sur les figures 2 à 4, l'obturateur est disposé verticalement, le joint 24 se trouvant en position inférieure.

Le corps 20 présente une forme globale cylindrique circulaire tubulaire. Ainsi, on trouve à l'intérieur du corps 20 un logement. Ce logement présente sur sensiblement toute la hauteur du corps 20 un diamètre constant. Seule la partie inférieure du corps 20 présente un diamètre réduit formant ainsi un épaulement 36.

La surface extérieure du corps 20 est elle aussi globalement cylindrique circulaire. Elle présente sur la majeure partie de sa hauteur un diamètre constant et forme ainsi une surface de préhension pour un utilisateur. On remarque toutefois que dans la partie inférieure du corps 20, ce dernier présente des joncs annulaires régulièrement espacés les uns des autres formant ainsi entre eux des crans 38.

La figure 3 montre aussi la présence de deux alésages transversaux dans la partie supérieure du corps 20. Comme illustré sur cette figure, un premier alésage 37 est destiné à recevoir la goupille d'arrêt 34. En variante (figure 2), cette goupille d'arrêt pourrait être supprimée, le bouchon 28 étant alors collé dans le corps 20, ou ne formant qu'une seule pièce avec lui. Mise à part l'absence de la goupille d'arrêt et l'adaptation du corps 20 et du bouchon 28, l'obturateur de la figure 2 reprend les mêmes éléments que ceux décrits en référence aux figures 3 et 4 et avec un agencement similaire.

Le second alésage 39 transversal peut être utilisé quant à lui pour le passage d'un lien permettant de relier l'étiquette d'identification 26 à l'obturateur.

Le bouchon 28 présente une forme cylindrique circulaire. Son diamètre extérieur est adapté au diamètre intérieur du corps 20 (dans sa partie supérieure). Le bouchon 28 présente lui aussi (figure 3) des alésages transversaux 37' et 39' correspondant aux alésages transversaux du corps 20 avec lesquels ils sont destinés à coopérer. Ainsi, un alésage transversal 37' du bouchon 28 reçoit la goupille d'arrêt 34 comme illustré sur la figure 3 tandis que l'autre alésage transversal 39' permet le passage d'un lien pour permettre la fixation de l'étiquette d'identification 26.

Le piston 32 présente une tête cylindrique 40 et une tige 42. La tête cylindrique 40 présente un diamètre extérieur correspondant au diamètre intérieur du corps 20 de telle sorte que le piston 32, et notamment sa tête cylindrique 40, puisse coulisser à l'intérieur du corps 20, dans la partie de grand diamètre intérieur de celui-ci.

La tige 42 du piston 32 présente quant à elle un diamètre extérieur lui permettant de coulisser à l'intérieur de la partie du corps 20 de diamètre intérieur réduit. La course du piston 32 est limitée vers le bas par l'épaulement 36.

Comme on peut le voir notamment sur la figure 3, la partie inférieure de la tige 42 de piston 32 présente un alésage longitudinal 44 lui permettant de recevoir l'embout 22. Un taraudage 45, visible sur la figure 4, réalisé dans la tige 42, peut recevoir une vis de pression sans tête (non représentée) pour maintenir l'embout 22 dans l'alésage longitudinal 44. Cette fixation facilite le montage/démontage de l'embout 22, qui peut ainsi être aisément changé. En effet, l'embout 22 est la seule pièce de l'obturateur pouvant s'user. En outre, il peut être avantageux éventuellement de pouvoir adapter des embouts de tailles et/ou formes différentes sur un même dispositif d'obturation de manière à pouvoir s'adapter à un plus grand nombre d'environnements.

L'embout 22 est formé, d'une part, par un arbre 46 et, d'autre part, le joint 24. L'arbre 46 est un arbre cylindrique circulaire présentant sensiblement en son centre une collerette 48 s'étendant radialement. Dans l'orientation choisie, la partie de l'arbre 46 qui s'étend au dessus de la collerette 48 est destinée à venir coopérer avec la tige 42 et le piston 32. Cette partie supérieure de l'arbre 46 est emmanchée dans l'alésage longitudinal 44 de ladite tige 42. La partie inférieure de l'arbre 46 est quant à elle surmoulée de caoutchouc formant ainsi le joint 24.

Le joint 24 présente à partir de la collerette 48 une forme tronconique. Le grand diamètre du tronc de cône correspondant coïncide avec le diamètre de la collerette 48. Le diamètre du tronc de cône s'amenuise en s'éloignant de la collerette 48. À titre d'exemple purement illustratif et nullement limitatif, on peut par exemple avoir un joint 24 présentant une partie tronconique dont la base, du côté de la collerette 48, présente un diamètre de 15 mm tandis que le diamètre du sommet du tronc de cône est de 9 mm. La hauteur du tronc de cône est par exemple comprise entre 15 et 20 mm.

L'extrémité distale du joint 24, c'est-à-dire l'extrémité opposée à la collerette 48, se présente par exemple sous la forme d'une calotte 50. Cette dernière peut être une calotte sphérique ou bien aussi être une calotte tronconique, le tronc de cône de la calotte 50 présentant alors un angle au sommet plus important que l'angle au sommet du tronc de cône du joint 24 décrit plus haut.

Le ressort 30 est un ressort hélicoïdal qui vient prendre place à l'intérieur du corps 20 entre le bouchon 28 et la tête cylindrique 40 du piston 32. Ce ressort hélicoïdal présente un diamètre extérieur compatible avec le diamètre intérieur du logement à l'intérieur du corps 20 dans lequel il se trouve. Il s'agit par exemple d'un ressort de compression. Il agit à l'encontre d'un mouvement vers le haut de la tête cylindrique 40 du piston 32. Autrement dit, le ressort 30 pousse le piston 32 vers l'extérieur du corps 20.

La figure 3 montre l'ensemble des pièces de la figure 4 en position montée et réalisant l'obturation de la tuyauterie 2. Dans la position montée, le bouchon 28 ferme le logement à l'intérieur du corps 20, à l'extrémité supérieure de celui-ci. La tête cylindrique 40 ferme quant à elle l'extrémité inférieure du logement à l'intérieur du corps 20. Le ressort 30 prend appui sur le bouchon 28 et pousse la tête cylindrique 40 vers l'épaulement 36.

Dans la position montée de la figure 3, le joint 24 vient fermer l'extrémité de la tuyauterie 2 se trouvant du côté de l'alésage 6 réalisé dans la plaque 4. Le ressort 30 permet d'appliquer sur l'embout 22, et donc au niveau du joint 24, une pression suffisante pour garantir une bonne étanchéité. Cette pression est par exemple comprise entre 0,3 et 0,4 bar (données numériques illustratives uniquement).

Un cran 38 est utilisé pour permettre le maintien de l'obturateur dans sa position d'obturation de la tuyauterie 2. Ce cran 38 est destiné à coopérer sur la figure 3 avec une équerre 52 fixée sur un support solidaire de la structure d'un mât réacteur (non représenté) d'aéronef. Toutefois, dans une variante de réalisation, un cran 38 pourrait coopérer avec un autre élément structurel pour assurer le maintien de l'obturateur.

La présence de plusieurs crans 38 permet à un même obturateur de s'adapter à des environnements structuraux différents et/ou aussi d'adapter la pression exercée par le ressort 30 sur l'embout 22.

L'obturateur décrit ci-dessus peut facilement être mis en oeuvre. En effet, il suffit de venir positionner puis appuyer l'embout sur le trou à obturer en tenant l'obturateur par le corps, de pousser sur celui-ci pour mettre le ressort en contrainte et de venir bloquer la position en faisant pénétrer l'équerre prévue à cet effet dans l'un des crans réalisés à la surface extérieure du corps de l'obturateur. Le maintien du corps, et donc du dispositif d'obturation, est alors assuré grâce à la compression du ressort 30. Le montage de l'obturateur peut ainsi se réaliser avec une seule main, ce qui facilite le montage même dans des espaces restreints.

Le démontage de l'obturateur est lui aussi aisé. En appuyant sur le corps de l'obturateur et en l'écartant de l'équerre, l'obturateur est libéré et peut être simplement retiré.

La forme conique du joint présente un double avantage. Elle permet, d'une part, d'assurer une bonne étanchéité même dans le cas où l'alésage sensé être aligné avec la tuyauterie est décalé et, d'autre part, elle permet de s'adapter à des diamètres de tuyauterie différents.

On remarque en outre que l'obturateur proposé par la présente invention présente une structure simple et peut ainsi être réalisé à bon marché.

La présente invention ne se limite pas aux formes de réalisations préférées décrites ci-dessus à titre d'exemples non limitatifs. Elle concerne également les variantes de réalisation à la portée de l'homme du métier dans le cadre des revendications ci-après.

## Revendications

1. Dispositif d'obturation d'une ouverture d'une tuyauterie d'aéronef, l'ouverture étant disposée contre une paroi, comportant un corps (20) portant un embout (22) muni d'un joint (24) d'étanchéité présentant une surface extérieure dont une zone au moins présente une forme tronconique, l'embout (22) étant mobile par rapport au corps (20),
**caractérisé en ce qu'**il comprend des moyens élastiques (30) agissant sur l'embout (22) dans une direction tendant à éloigner l'embout (22) du corps (20).

2. Dispositif d'obturation selon la revendication 1, **caractérisé en ce que** l'embout (22) forme une extrémité distale d'une tige (42), **en ce que** ladite tige présente à son extrémité proximale, opposée à son extrémité distale, une tête cylindrique (40), et **en ce que** le corps (20) présente au moins une zone tubulaire et un épaulement (36) ménagé à l'une de ses extrémités agencés de telle sorte que ladite tête cylindrique (40) puisse coulisser à l'intérieur de cette zone tubulaire jusqu'à l'épaulement.

3. Dispositif d'obturation selon la revendication 2, **caractérisé en ce que** les moyens élastiques comprennent un ressort (30) logé à l'intérieur de la zone tubulaire et qui précontraint la tête cylindrique (40) en direction de l'épaulement (36).

4. Dispositif d'obturation selon l'une des revendications 2 ou 3, **caractérisé en ce que** l'extrémité du corps opposée à l'épaulement est fermée par un bouchon (28).

5. Dispositif selon l'une des revendications 1 à 4, **caractérisé en ce que** le corps (20) présente une surface extérieure sur laquelle au moins un cran (38) est réalisé.

6. Dispositif selon l'une des revendications 1 à 5, **caractérisé en ce que** le corps (20) présente une surface extérieure présentant une zone de préhension.

7. Dispositif selon l'une des revendications 1 à 6, **caractérisé en ce que** le joint (24) d'étanchéité est réalisé en caoutchouc.

8. Dispositif selon l'une des revendications 1 à 7, **caractérisé en ce que** la forme tronconique est telle que son plus petit diamètre est inférieur à 9 mm, et **en ce que** sont plus grand diamètre est supérieur à 13 mm.

9. Procédé d'obturation d'une tuyauterie d'aéronef présentant une ouverture disposée contre une paroi, un alésage dans ladite paroi permettant un accès à l'ouverture de la tuyauterie, **caractérisé en ce qu'**il comporte les étapes suivantes :
- mise en place d'une partie au moins d'un joint d'étanchéité présentant une zone de forme tronconique dans l'ouverture de la tuyauterie à travers l'alésage de la paroi, ledit joint se trouvant à une extrémité d'un dispositif d'obturation,
- maintien en place du joint d'étanchéité dans l'ouverture par blocage du dispositif d'obturation contre un support fixe par rapport à la tuyauterie, et
**en ce que** le dispositif d'obturation comporte un corps tubulaire,
**en ce que** le joint d'étanchéité est monté sur un embout mobile par rapport au corps tubulaire,
**en ce que** le corps tubulaire contient des moyens élastiques agissant sur l'embout dans une direction tendant à éloigner le joint d'étanchéité du corps tubulaire,
**en ce que** les moyens élastiques sont contraints après mise en place du joint d'étanchéité dans l'ouverture, et
**en ce que** le corps tubulaire présente une face extérieure avec au moins une butée pouvant coopérer avec le support fixe de telle sorte que la contrainte exercée sur les moyens élastiques soit maintenue et contribue au blocage du corps tubulaire contre le support fixe.

## Patentansprüche

1. Vorrichtung zum Verschließen einer Öffnung einer Leitung eines Luftfahrzeugs, wobei die Öffnung an einer Wand angeordnet ist, aufweisend einen Körper (20), welcher ein Ansatzstück (22) trägt, das mit einer Dichtung (24) versehen ist, welche eine äußere Fläche aufweist, von der mindestens ein Bereich eine kegelstumpfartige Form aufweist, wobei das Ansatzstück (22) in Bezug auf den Körper (20) beweglich ist, **dadurch gekennzeichnet, dass** sie elastische Mittel (30) aufweist, welche auf das Ansatzstück (22) in einer Richtung einwirken, welche das Ansatzstück (22) vom Körper (20) zu entfernen versucht.

2. Verschlussvorrichtung nach Anspruch 1, **dadurch gekennzeichnet, dass** das Ansatzstück (22) ein distales Ende einer Stange (42) bildet, dass die Stange an ihrem proximalen Ende, welches ihrem distalen Ende gegenüberliegt, einen zylindrischen Kopf (40) aufweist, und dass der Körper (20) mindestens einen rohrförmigen Bereich und eine an einem seiner Enden ausgeführte Schulter (36) aufweist, die derartig angeordnet sind, dass der zylindrische Kopf (40) im Inneren dieses rohrförmigen Bereichs bis zu Schulter gleiten kann.

3. Verschlussvorrichtung nach Anspruch 2, **dadurch gekennzeichnet, dass** die elastischen Mittel eine Feder (30) aufweisen, welche im Inneren des rohrförmigen Bereichs aufgenommen ist und welche den zylindrischen Kopf (40) in Richtung der Schulter (36) vorspannt.

4. Verschlussvorrichtung nach einem der Ansprüche 2 oder 3, **dadurch gekennzeichnet, dass** das Ende des Körpers, welches der Schulter gegenüber liegt, durch einen Stopfen (28) geschlossen ist.

5. Verschlussvorrichtung nach einem der Ansprüche 1 bis 4, **dadurch gekennzeichnet, dass** der Körper (20) eine äußere Fläche aufweist, an welcher mindestens ein Einschnitt (38) ausgeführt ist.

6. Verschlussvorrichtung nach einem der Ansprüche 1 bis 5, **dadurch gekennzeichnet, dass** der Körper (20) eine äußere Fläche aufweist, welche einen Greifbereich aufweist.

7. Vorrichtung nach einem der Ansprüche 1 bis 6, **dadurch gekennzeichnet, dass** die Dichtung (24) aus Kautschuk ausgeführt ist.

8. Verschlussvorrichtung nach einem der Ansprüche 1 bis 7, **dadurch gekennzeichnet, dass** die kegelstumpfartige Form derartig ist, dass ihr kleinster Durchmesser kleiner als 9 mm ist, und dass ihr größter Durchmesser größer als 13 mm ist.

9. Verfahren zum Verschließen einer Leitung eines Luftfahrzeugs, aufweisend eine an einer Wand angeordneten Öffnung, eine Öffnung in der Wand, welche einen Zugang zu der Öffnung der Leitung ermöglicht, **dadurch gekennzeichnet, dass** es die folgenden Schritte aufweist:
Anbringen von mindestens einem Abschnitt einer Dichtung, welche einen Bereich mit kegelstumpfartiger Form aufweist, in der Öffnung der Leitung durch die Öffnung der Wand hindurch, wobei sich die Dichtung an einem Ende einer Verschlussvorrichtung befindet,
Festhalten der Dichtung an Ort und Stelle in der Öffnung durch Blockieren der Verschlussvorrichtung an einem festen Träger in Bezug auf die Leitung, und
dass die Verschlussvorrichtung einen rohrförmigen Körper aufweist,
dass die Dichtung an einem in Bezug auf den rohrförmigen Körper beweglichen Ansatzstück montiert ist,
dass der rohrförmige Körper elastische Mittel enthält, welche auf das Ansatzstück in einer Richtung einwirken, welche das Ansatzstück vom Körper zu entfernen versuchen,
dass die elastischen Mittel nach Einbringen der Dichtung in die Öffnung belastet werden, und
dass der rohrförmige Körper eine äußere Fläche mit mindestens einem Anschlag aufweist, welcher mit dem festen Träger derartig zusammen wirken kann, dass die auf die elastischen Mittel ausgeübte Belastung gehalten wird und zur Blockierung des rohrförmigen Körpers an dem festen Träger beiträgt.

## Claims

1. Device for closing an opening of aircraft piping, the opening being arranged against a wall, comprising a body (20) bearing a tip (22) provided with a seal (24) having an external surface of which at least one region is frustoconical in shape, the tip (22) being mobile with respect to the body (20),
**characterized in that** it comprises elastic means (30) acting on the tip (22) in a direction urging the tip (22) away from the body (20).

2. Closure device according to Claim 1, **characterized in that** the tip (22) forms a distal end of a stem (42), **in that** said stem has, at its proximal end opposite its distal end, a cylindrical head (40), and **in that** the body (20) has at least one tubular region and one shoulder (36) created at one of its ends arranged such that said cylindrical head (40) is able to slide inside said tubular region as far as the shoulder.

3. Closure device according to Claim 2, **characterized in that** the elastic means comprise a spring (30) which is housed inside the tubular region and preloads the cylindrical head (40) in the direction of the shoulder (36).

4. Closure device according to one of Claims 2 and 3, **characterized in that** the opposite end of the body from the shoulder is closed by a stopper (28).

5. Closure device according to one of Claims 1 to 4, **characterized in that** the body (20) has an external surface on which at least one notch (38) is formed.

6. Closure device according to one of Claims 1 to 5, **characterized in that** the body (20) has an external surface featuring a gripping region.

7. Closure device according to one of Claims 1 to 6, **characterized in that** the seal (24) is made of rubber.

8. Closure device according to one of Claims 1 to 7, **characterized in that** the frustoconical shape is such that its smallest diameter is smaller than 9 mm, and **in that** its largest diameter is greater than 13 mm.

9. Method for closing aircraft piping having an opening arranged against a wall, a bore in said wall allowing access to the opening of the piping, **characterized in that** it comprises the following steps:
- putting in place at least part of a seal having a region of frustoconical shape in the opening of the piping through the bore of the wall, said seal being at one end of a closure device,
- holding the seal in place in the opening by immobilizing the closure device against a support which is fixed with respect to the piping, and
**in that** the closure device comprises a tubular body,
**in that** the seal is mounted on a tip that is mobile with respect to the tubular body,
**in that** the tubular body contains elastic means acting on the tip in a direction urging the seal away from the tubular body,
**in that** the elastic means are loaded after positioning of the seal in the opening, and
**in that** the tubular body has an external face with at least one stop that is able to interact with the fixed support such that the load exerted on the elastic means is maintained and helps to immobilize the tubular body against the fixed support.
